Europäisches Patentamt

European Patent Office

Office européen des brevets

(11) Numéro de publication: **0 081 447**
**B1**

(12) **FASCICULE DE BREVET EUROPEEN**

(45) Date de publication du fascicule du brevet:
26.02.86

(51) Int. Cl.⁴: **A 01 F 25/20**

(21) Numéro de dépôt: **82440042.8**

(22) Date de dépôt: **03.12.82**

(54) Perfectionnement aux machines pour le prélèvement de blocs de fourrage dans un silo.

| | |
|---|---|
| (30) Priorité: **08.12.81 FR 8123061** | (73) Titulaire: **KUHN S.A., 4, Impasse des Fabriques, F-67700 Saverne (FR)** |
| (43) Date de publication de la demande:<br>**15.06.83 Bulletin 83/24** | (72) Inventeur: **Oberle, Edmond, 11, Rue de Thal Haegen, F-67700 Saverne (FR)** |
| (45) Mention de la délivrance du brevet:<br>**26.02.86 Bulletin 86/9** | (74) Mandataire: **Andres, Jean-Claude, KUHN S.A. 4, Impasse des Fabriques, F-67700 Saverne (FR)** |
| (84) Etats contractants désignés:<br>**BE DE GB NL** | |
| (56) Documents cités:<br>**FR - A - 2 218 046**<br>**GB - A - 566 252**<br>**US - A - 4 277 890** | |

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

# 0 081 447

**Description**

La présente invention concerne une machine pour le prélèvement de blocs de fourrage dans un silo. Cette machine comporte notamment un châssis pourvu à sa partie inférieure de dents s'étendant dans un plan sensiblement horizontal et, à une certaine distance au-dessus de ces dents, un support portant un dispositif de coupe. Celui-ci comprend au moins un couteau et est guidé suivant une trajectoire en forme de U en vue du découpage de blocs de fourrage.

Sur les machines de ce genre, telles que décrites dans la demande de brevet FR 2.218.046, on constate d'importantes déviations du ou des couteaux vers l'intérieur des blocs durant le découpage dans les silos lorsque le fourrage est bien compact. Ces déviations sont essentiellement dues aux déformations du ou des couteaux par suite de la résistance du fourrage. En effet, en raison de cette résistance le ou les couteaux se placent dans une position légèrement oblique par rapport à la verticale, c'est-à-dire que leur partie inférieure est en retrait par rapport à leur partie supérieure. De ce fait, dans les virages ces parties inférieures des couteaux coupent à l'intérieur du pourtour théorique du bloc. Il en résulte un découpage de blocs de volume irrégulier. La base de ces blocs étant généralement plus petite que leur partie supérieure, ils sont très instables durant le transport. En sus, le front de coupe du silo est très irrégulier, ce qui est défavorable lors des prélèvements suivants.

La présente invention a pour but une machine pour le prélèvement de blocs de fourrage dans un silo, ne comportant pas les inconvénients précités des machines connues.

A cet effet, une importante caractéristique de l'invention consiste en ce que, dans la position normale pour le désilage, le dispositif de coupe est incliné de telle sorte que son ou ses couteaux forment un angle avec la verticale et soient dirigés dans la direction d'avancement dudit dispositif, les partie infinieure du coucom se situant en avant de se partie supérieure par rapport à cette même direction d'avancement, lorsqu' ils sont en dehors du fourrage ensilé. Cette inclinaison permet de compenser la deformation due à la résistance du fourrage durant la coupe. De ce fait, le ou lesdits couteaux sont pratiquement verticaux durant le découpage. Ledit angle d'inclinaison est avantageusement réglable en fonction de la nature du produit à découper de préférence entre 1 et 10°. En vue de ce réglage le dispositif de coupe est articulé par rapport à son support au moyen d'un axe sensiblement horizontal, des moyens de serrage étant prévus pour l'immobilisation dans la position choisie.

Selon une autre caractéristique de l'invention le dispositif de coupe est inclinable de part et d'autre de la verticale. De ce fait, il est possible de découper des blocs en faisant avancer le ou les couteaux de la gauche vers la droite ou inversement. Il n'y a donc pas lieu de faire revenir les couteaux à vide dans la position de départ.

Sur la machine on peut avantageusement prévoir des moyens pour le changement automatique de l'inclinaison du dispositif de coupe. Cela évite toute intervention manuelle de la part de l'utilisateur et garantit un positionnement correct du ou des couteaux.

Une autre caractéristique de l'invention consiste en ce que le dispositif de coupe comprend deux couteaux, chacun de ceux-ci étant fixé à un coulisseau guidé en translation dans un boîtier, à l'aide de moyens disposés de part et d'autre desdits coulisseaux et places près des deux extremités dudit boîtier. Cette disposition améliore considérablement le guidage des coulisseaux, ce qui entraîne une réduction des déviations dues aux déformations au niveau des coulisseaux.

Selon une autre caractéristique de l'invention, les couteaux du dispositif de coupe sont moins larges à leur partie inférieure qu'à leur partie supérieure. Grâce à cette caractéristique le frottement du fourrage sur les flancs des couteaux, notamment dans les virages, est réduit. Cette réduction du frottement diminue sensiblement les déformations des couteaux et par conséquent les risques de déviation.

Conformément à une autre caractéristique de l'invention, les couteaux du dispositif de coupe sont moins épais à leur partie inférieure qu'à leur partie supérieure. Cela facilite la pénétration et la progression dans le fourrage. Cette caractéristique diminue donc également les risques de déviation des couteaux.

D'autres caractéristiques et avantages de l'invention ressortiront de la description ci-après, avec référence aux dessins annexés qui représentent, à titre d'exemples non limitatifs, quelques formes de réalisation de l'invention.

Dans ces dessins:
- La figure 1 représente une vue de côté d'une machine selon l'invention,
- La figure 2 représente à plus grande échelle une vue de côté du dispositif de coupe,
- La figure 3 représente une coupe suivant le plan III-III de la figure 2,
- La figure 4 représente une vue de côté d'une variante de réalisation,
- La figure 5 représente une coupe suivant le plan V-V de la figure 4,
- La figure 6 représente en coupe, suivant le plan VI-VI de la figure 7, un premier exemple de réalisation des moyens de guidage selon l'invention,
- La figure 7 représente une coupe suivant le plan VII-VII de la figure 6,
- La figure 8 représente une coupe suivant le plan VIII-VIII de la figure 6,
- La figure 9 représente une coupe analogue à la figure 8, d'un deuxième exemple de réalisation,
- La figure 10 représente une vue de face d'un couteau selon l'invention,
- La figure 11 représente une vue de côté d'un couteau selon l'invention.

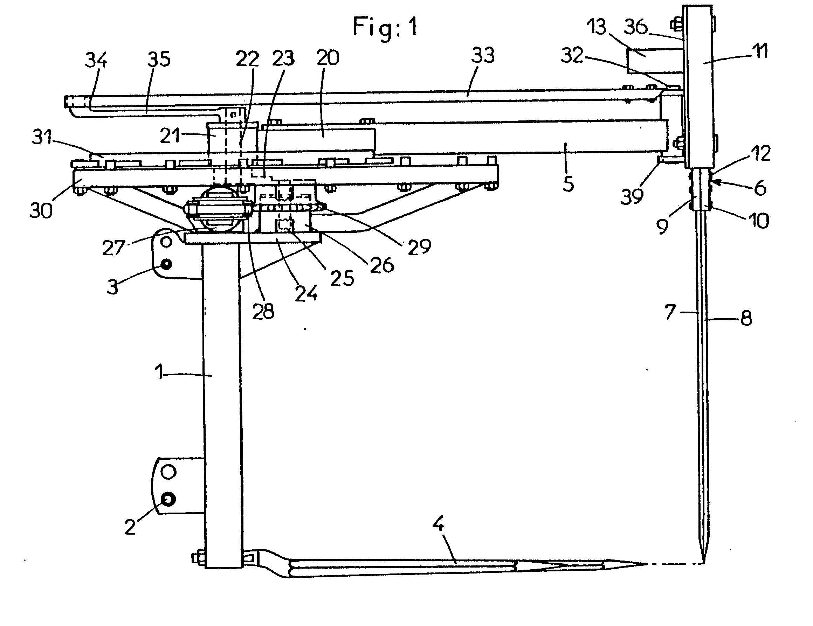

Telle qu'elle est représentée sur la figure 1, la machine selon l'invention comporte notamment un châssis (1) formant un cadre rigide. Ce châssis (1) comporte trois points d'accouplément pour l'attelage à un tracteur d'entraînement non représenté. Ces points d'attelage sont constitués par deux tourillons inférieurs (2) et un tourillon supérieur (3). Ledit châssis est également pourvu à sa partie inférieure de dents (4) qui s'étendent dans un plan sensiblement horizontal. A une certaine distance audessus de ces dents (4) est prévu un bras support (5) portant à son extrémité extérieure un dispositif de coupe (6). Celui-ci comprend essentiellement deux couteaux parallèles (7 et 8) qui s'étendent vers le bas, sensiblement jusqu'aux dents (4) précitées. Ces deux couteaux (7, 8) pourraient également être remplacés par un seul couteau.

Ces couteaux (7, 8) sont reliés à des coulisseaux (9,10) s'étendant en grande partie à l'intérieur d'un boîtier (11). Cette liaison est effectuée au moyen de vis (12). Celles-ci se situent en dehors du boîtier (11) de telle sorte que les couteaux (7, 8) puissent être démontés sans qu'il y ait lieu d'acceder à l'intérieur dudit boîtier.

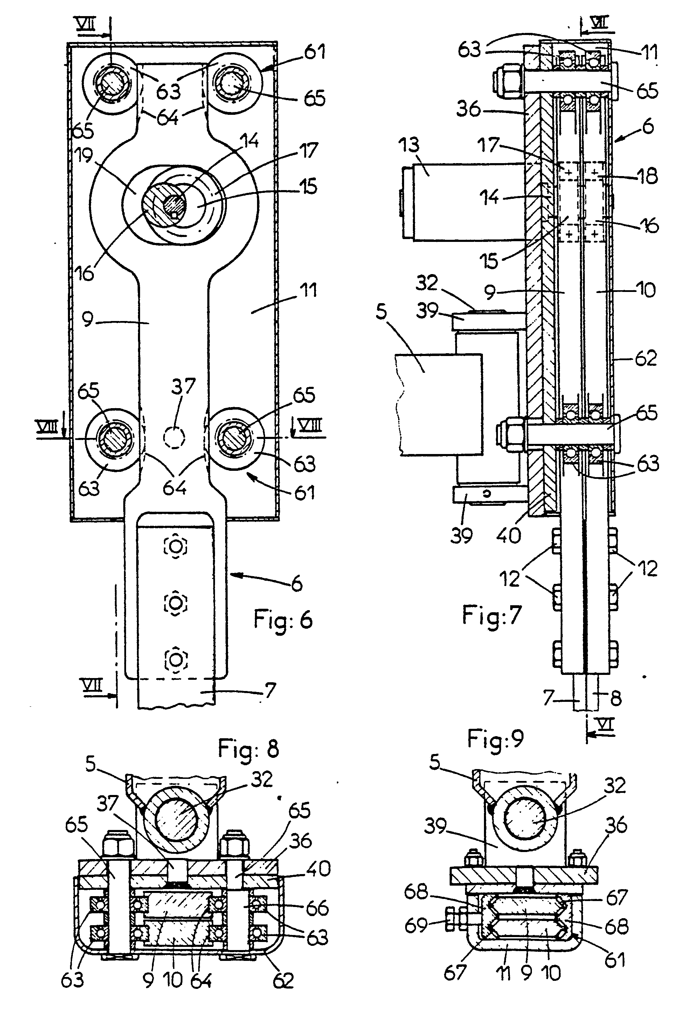

Durant le travail lesdits couteaux (7, 8) sont entraines en un mouvement alternatif au moyen d'un moteur hydraulique (13) situé sur le côté arrière du boîtier (11). A cet effet, l'arbre (14) de ce moteur comprend deux parties excentrées (15 et 16) portant chacune un galet (17 et 18). Chaque galet (17 et 18) est engagé dans un orifice sensiblement horizontal (19) prévu sur chacun des coulisseaux (9 et 10). Ainsi, lorsque ces galets (17, 18) sont entraînés en rotation au moyen de l'arbre (14) du moteur hydraulique (13), ils provoquent un déplacement vertical des coulisseaux (9 et 10) et des couteaux (7 et 8). Ces moyens d'entraînement ressortent clairement des figures 6 et 7.

Le bras support (5) du dispositif de coupe (6) est vissé sur un manche (20) solidaire d'une douille (21). Par l'intermédiaire de cette douille (21), ce bras support (5) est articulé sur un axe (22) sensiblement vertical d'une manivelle (23). Celle-ci est elle-même articulée sur une plaque (24) solidaire du châssis (1), au moyen d'un second axe d'articulation (25) excentré par rapport au premier axe (22). Pour cela cette plaque (24) comporte une douille (26) dans laquelle est guidé ledit axe d'articulation (25) à l'aide de roulements à rouleaux coniques non représentes.

Des moyens sont prévus pour entraîner le bras support (5) de sorte que le dispositif de coupe (6) se déplace sur une trajectoire (T) en forme de U, en vue du découpage de blocs de forme sensiblement rectangulaire.

Ces moyens sont constitués par un vérin à double effet (27) disposé horizontalement, lequel vérin fait tourner la manivelle (23) autour de son axe d'articulation (25) par l'intermédiaire d'une chaîne (28) et d'une couronne dentée (29) solidaire de ladite manivelle (23) et, par deux couronnes (30 et 31) faisant tourner le bras support (5) autour de son axe d'articulation (22) avec la manivelle (23). La couronne (31) est solidaire du bras support (5) et est concentrique à son axe d'articulation (22), tandis que l'autre couronne (30) est solidaire du châssis (1) et est concentrique à l'axe d'articulation (25) de la manivelle (23). La couronne (31) solidaire du bras support (5) est disposée à l'intérieur de la couronne (30) et engrène avec celle-ci. De cette façon la rotation du bras support (5) autour de son axe d'articulation (22) avec la manivelle (23) s'effectue dans le sens inverse du sens de rotation de ladite manivelle (23) autour de son axe d'articulation (25) avec le châssis (1). En sus, ces mouvements de rotation sont synchronisés de telle sorte que, lorsque ladite manivelle effectue trois tours complets autour de son axe (25) avec le châssis (1), le bras support (5) du dispositif de coupe (6) effectue quatre tours complets par rapport à son axe d'articulation (22) avec la manivelle (23), ce qui correspond à un tour complet du bras support (5) et du dispositif de coupe (6) par rapport au châssis (1). Grâce à cette synchronisation le dispositif de coupe (6) se déplace selon une trajectoire en forme de carré aux angles légèrement arrondis. En pratique, seule une partie (T) de cette trajectoire est utilisée pour le découpage de blocs de fourrage de forme rectangulaire.

Le dispositif de coupe (6) est articulé sur son bras support (5) au moyen d'un axe (32) sensiblement vertical. Il est en sus relié à une tringle (33) qui est guidée sur un galet (34) situé sensiblement sur le centre instantané de rotation dudit dispositif de coupe. Ce galet (34) est solidaire d'un bras (35) relié à la partie supérieure de l'axe d'articulation (22) de la manivelle (23). Cette disposition permet d'orienter le dispositif de coupe (6) durant son déplacement de telle sorte que les couteaux (7, 8) demeurent constamment tangents à leur trajectoire (T).

Conformément à l'invention, dans la position normale qu'occupe la machine pour le désilage, le dispositif de coupe (6) est incliné de telle sorte que les couteaux (7 et 8) forment un angle ($\alpha$) avec la verticale (V) et soient diriges dans la direction d'avancement (A) du dispotif (6) lorsqu'ils sont en dehors du fourrage ensilé. Cette inclinaison permet de compenser la déformation provoquée par la résistance du fourrage durant la coupe. En effet, par suite de cette résistance, les couteaux (7, 8) sont pousses vers le sens opposé à la direction d'avancement (A) et sont ainsi ramenés dans une position sensiblement verticale durant le découpage.

Grâce à cette caractéristique la partie inférieure des couteaux (7 et 8) se situe au mâme niveau que leur partie supérieure durant le travail. On évite ainsi que les parties inférieures dévient vers l'intérieur du bloc à découper dans les angles de leur trajectoire (T).

Ledit angle ($\alpha$) que forment les couteaux (7, 8) avec la verticale (V) est réglable et se situe de préférence entre 1 et 10°. On peut ainsi choisir leur position en fonction de la nature du produit à désiler. Ainsi, lorsque ce produit est dense et très tassé, il y a lieu d'adopter un angle ($\alpha$) important alors que dans le cas contraire il y a lieu de réduire la valeur de cet angle ($\alpha$).

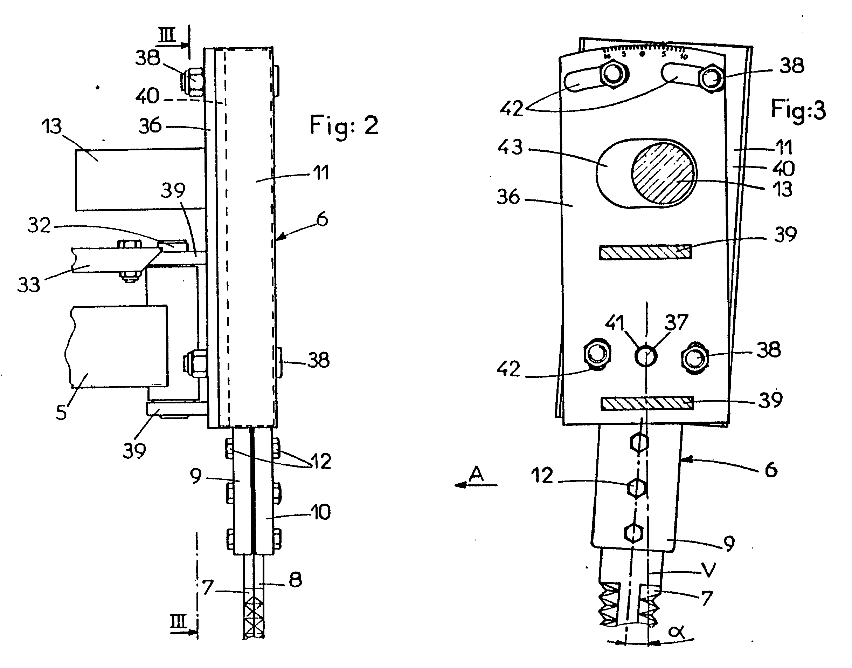

Tel que cela ressort des figures 2 et 3, les moyens permettant l'inclinaison de la tâte de coupe (6) sont constitués par une plaque (36), un pivot sensiblement horizontal (37) et des boulons de serrage (38). Ladite plaque est disposée entre le dispositif de coupe (6) et son bras support (5). Elle est fixée audit bras support au moyen de deux pattes (39) reliées à l'axe d'articulation (32) autour duquel s'effectue l'orientation précitée du dispositif de coupe (6).

Le pivot (37) est solidaire de la paroi arrière (40) du boîtier (11) du dispositif de coupe (6). Il s'engage dans un alésage (41) prévu dans ladite plaque (36). Enfin, les boulons de serrage (38) traversent le boîtier (11) et permettent d'immobiliser celui-ci par rapport à la plaque (36) dans la position choisie. A cet effet, les trous de

0 081 447

passage (42) de ces boulons dans la plaque (36) sont de forme oblongue. Dans l'exemple des figures 2 et 3, le pivot (37) se situe près de la partie inférieure du boîtier (11). De cette façon la partie supérieure des couteaux (7, 8) est peu décalée par rapport à la position verticale théorique. A la partie supérieure du boîtier (11) et de la plaque (36) sont prévus un repère et des graduations en vue du réglage de la valeur de l'angle (α). Dans la plaque (36) est également prévu un orifice (43) pour le passage du moteur hydraulique (13).

Le dispositif de coupe (6) est avantageusement inclinable de part et d'autre de la verticale (V). Cette caractéristique permet de découper des blocs en faisant avancer les couteaux (7, 8) de la gauche vers la droite ou bien inversement. Il n'y a donc pas lieu de faire revenir le dispositif de coupe (6) à vide dans la même position de départ pour chaque découpage.

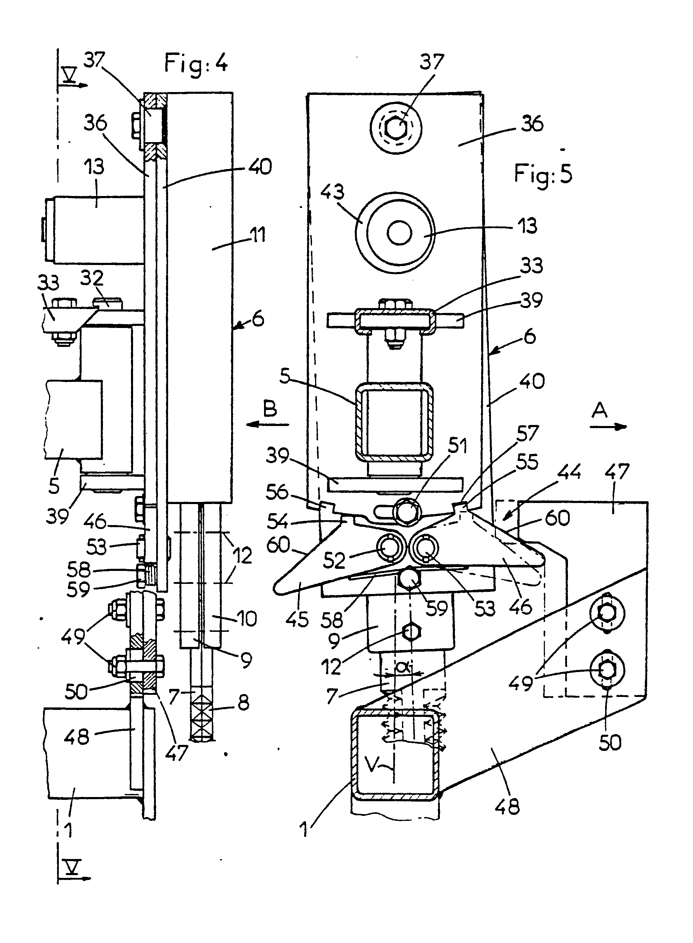

Dans l'exemple de realisation selon les figures 4 et 5, la machine comporte des moyens (44) pour le changement automatique de l'inclinaison du dispositif de coupe (6) en vue du découpage de la droite vers la gauche et inversement. Ces moyens sont notamment constitués par deux verrous (45 et 46) disposés sur la paroi arrière (40) du boîtier (11) et deux butées (47) disposées sur le châssis (1). A cet effet, celui-ci comporte sur chaque côté une patte (48) sur laquelle est fixée une de ces butées (47) au moyen de boulons (49). Les trous de passage (50) de ces derniers dans chaque patte (48) sont de forme oblongue afin de pouvoir régler la position des butées (47).

Tout comme dans l'exemple des figures 2 et 3, le dispositif de coupe (6) est articulé sur une plaque (36) au moyen d'un pivot (37) qui est néanmoins placé à la partie supérieure du boîtier (11). A la partie inférieure de ce boîtier est prévue une vis épaulée (51) assurant le guidage du boîtier (11) par rapport à la plaque (36).

Chacun desdits verrous (45 et 46) est articulé sur un axe sensiblement horizontal (52, 53). En sus, chacun comporte un tenon (54 et 55) destiné à se loger dans une entaille (56 et 57) prévue sur la plaque (36) en vue du verrouillage du dispositif de coupe (6) dans l'une ou l'autre des positions inclinées. Ainsi, lorsque le tenon (55) est engagé dans l'entaille (57) tel que cela est représenté sur la figure 5, les couteaux (7, 8) forment un angle (α) avec la verticale (V) et sont dirigés dans le sens d'avancement (A). Par contre, lorsque le tenon (54) du verrou (45) est engagé dans l'entaille (56) correspondante, les couteaux (7, 8) sont inclinés de l'autre côté par rapport à la verticale, ce qui permet le découpage dans le sens d'avancement (B). Les tenons (54 et 55) sont poussés dans lesdites entailles (56 et 57) au moyen d'un ressort de torsion (58) à double effet. Ce ressort (58) est f ixé sur la paroi arrière (40) du boîtier (11) au moyen d'une vis (59).

Pour le déverrouillage du dispositif de coupe (6) en vue du changement d'inclinaison, les verrous (45 ou 46) sont actionnés par les butées (47). A cet effet, chacun comporte une rampe (60) qui vient en contact avec la butée (47) correspondante, lorsque le dispositif de coupe (6) arrive vers la fin de sa trajectoire (T). Par suite du déplacement du dispositif de coupe (6), la butée exerce une pression sur le verrou correspondant (45 ou 46) et le fait pivoter autour de son axe d'articulation (52 ou 53) de sorte que son tenon (54 ou 55) se dégage de l'entaille (56 ou 57). (Position représentée en traits mixtes sur la figure 5). Le dispositif de coupe (6) ainsi déverrouille pivote autour du pivot (37) jusqu'à ce qu'il arrive dans la position appropriée pour le déplacement en sens contraire, c'est-à-dire lorsque les couteaux (7, 8) se situent de l'autre côté par rapport à la verticale (V) et forment à nouveau un angle (α) avec celle-ci. Ledit pivotement peut âtre provoqué par la résistance du fourrage restant à couper ou par la butée (47) contre laquelle s'appuie le dispositif (6). On peut avantageusement prévoir des moyens sur le dispositif de coupe (6) ou le châssis (1) pour arrâter le déplacement dudit dispositif de coupe dès qu'il atteint la position appropriée.

Dans la nouvelle position le tenon (54 ou 55) de l'autre verrou (45 ou 46) s'engage automatiquement dans l'entaille (56 ou 57) correspondante, sous l'effet de la pression du ressort (58). Ledit verrou immobilise ainsi le dispositif de coupe (6) durant le déplacement dans le sens contraire.

Afin d'améliorer le guidage des coulisseaux (9 et 10) portant les couteaux (7 et 8), une importante caractéristique consiste à rapparter des moyens de guidage (61) de part et d'autre desdits coulisseaux et pres des deux extrémités du boîtier (11). Deux modes de guidage sont illustrés sur les figures 6 à 9. Avec cette disposition des moyens de guidage (61), on obtient une meilleure répartition des charges s'exerçant sur lesdits moyens et une diminution du jeu de fonctionnement.

Par ailleurs lesdits moyens (61) assurent un guidage dans la direction perpendiculaire au sens d'avancement (A ou B) du dispositif de coupe (6) de telle sorte qu'il existe un jeu entre les deux coulisseaux (9 et 10) et entre lesdits coulisseaux (9 et 10) et les parois avant (62) et arrière (40) du boîtier (11). On élimine ainsi tout risque de grippage dû aux éventuelles déformations des coulisseaux (9 et 10) dans ladite direction perpendiculaire au sens d'avancement (A ou B).

Dans l'exemple représenté sur les figures 6, 7 et 8, les moyens de guidage (61) des coulisseaux (9 et 10) sont constitués par des galets (63). Pour chaque coulisseau (9 ou 10) sont prévus quatre galets (63) disposés de part et d'autre dudit coulisseau et près des extrémités du boîtier (11). La distance entre les galets (63) supérieurs et les galets (63) inférieurs est ainsi très importante, ce qui assure la meilleure répartition des charges et la diminution du jeu de fonctionnement.

En vue du guidage des coulisseaux (9 et 10) dans la direction perpendiculaire au sens d'avancement (A) du dispositif de coupe, lesdits galets (63) sont engagés dans des rainures (64) prévues sur les flancs des coulisseaux (9 et 10).

Ces galets (63) sont montés sur des axes (65) guidés à la fois dans la paroi avant (62) et la paroi arrière (40) du boîtier (11). Cela procure une très bonne stabilité au montage des galets (63). Dans l'exemple des figures 6 à 8, ces axes (65) servent également pour la fixation du boîtier (11) sur la plaque (36) reliée au bras support (5). Les deux axes (65) s itués sur le même côté par rapport aux coulisseaux (9 et 10) comportent une partie centrale (66) qui est excentrée par rapport à ses parties guidées dans les parois avant et arrière (62 et 40) du boîtier (11) (voir figure 8). Ainsi, en faisant tourner ces deux axes (65) sur eux-mêmes, on déplace les galets (63) correspondants. Cela permet de rattraper d'éventuels jeux au niveau du guidage des coulisseaux (9 et 10).

Dans la variante selon la figure 9 les moyens de guidage (61) sont constitués par des plaquettes à aiguilles (67) disposées de part et d'autre des coulisseaux (9 et 10) près des extrémités du boîtier (11). Chaque plaquette comporte deux rangées d'aiguilles formant pratiquement un angle droit entre elles. Les coulisseaux (9 et 10) sont guidés par ces plaquettes (67) au moyen de leurs flancs qui sont réalisés en forme de V à cet effet. Ces plaquettes (67) assurent également le maintien d'un léger jeu à la fois entre les deux coulisseaux (9 et 10) et entre ceux-ci et les parois avant (62) et arrière (40) du boîtier (11).

Lesdites plaquettes (67) sont guidées dans des rails (68) logés dans le boîtier (11). La position des rails (68) se trouvant sur le même côté par rapport aux deux coulisseaux (9 et 10) est réglable au moyen de vis (69). Cette disposition permet de rattraper d'éventuels jeux entre les coulisseaux (9 et 10) et les plaquettes (67).

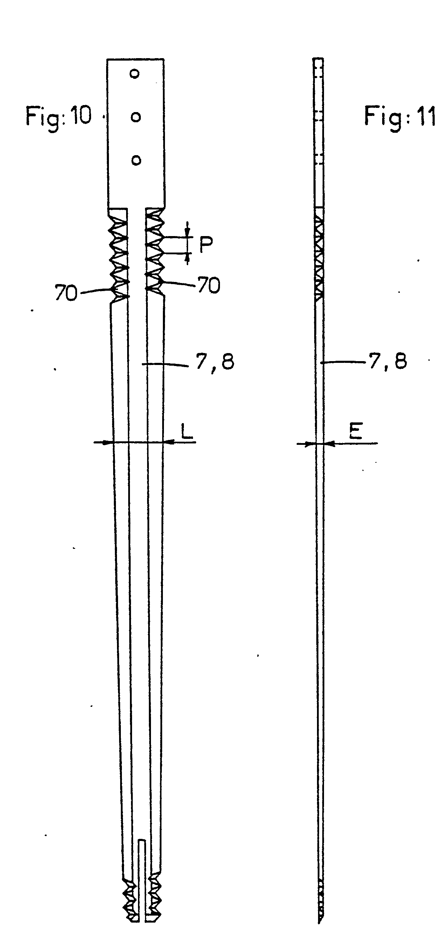

Afin de réduire le frottement du fourrage sur les flancs des couteaux (7 et 8), leur largeur (L) est avantageusement moins importante à leur partie inférieure qu'à leur partie supérieure (voir figure 10). Lesdits couteaux (7 et 9) peuvent ainsi mieux tourner dans les virages. Les déformations dues notamment au talonnage dans les virages sont ainsi considérablement réduites. D'autre part, cette réduction de la largeur des couteaux (7 et 8) n'est pas défavorable pour leur résistance à la rupture vu que les efforts sont nettement moins importants dans leur partie inférieure que dans leur partie supérieure.

Selon une autre caractéristique de l'invention, l'épaisseur (E) des couteaux (7 et 8) est moins importante à leur partie inférieure qu'à leur partie supérieure (voir figure 11). Cela diminue aussi la surface soumise à la réaction du fourrage. Ainsi lesdits couteaux (7 et 8) pénètrent et progressent plus facilement dans le silo, ce qui réduit les déformations dues à la résistance du fourrage.

On peut également prévoir des couteaux (7 et 8) qui sont à la fois moins larges et moins épais à leur partie inférieure qu'à leur partie supérieure. Ce mode de réalisation cumule les avantages des deux exemples précités.

Les couteaux (7 et 8) présentent des dents de coupe (70) sur chacun de leurs flancs. Conformément à l'invention, ces dents (70) sont décalées de la valeur de la moitié d'un pas (P) sur l'un des flancs par rapport à l'autre. Grâce à ce décalage, vis-à-vis de chaque entaille entre deux dents (70) se situe une dent (70) du flanc opposé (voir figure 10). La section de chaque couteau (7 ou 8) est ainsi plus constante, ce qui le rend moins déformable.

## Revendications

1. Machine pour le prélèvement de blocs de fourrage dans un silo, comportant notamment un châssis (1) pourvu à sa partie inférieure de dents (4) s'étendant dans un plan sensiblement horizontal et, à une certaine distance audessus de ces dents (4), un support (5) portant un dispositif de coupe (6) comprenant au moins un couteau (7, 8) s'étendant vers le bas, sensiblement jusqu'au niveau des dents (4) et assurant le découpage de blocs, caractérisée par le fait que le dispositif de coupe (6) est incliné dans su propre direction d'avancement (A) de telle sorte que son couteau (7, 8) lorsqu'il est en dehors du fourrage ensilé, forme un angle ($\alpha$) avec la verticale. (V), la partie infinieure du cocteaux (7, 8) se situant en avant de son partie supérieure par raffort à cette revue direction d'avancement.

2. Machine selon la revendication 1, caractérisée par le fait que l'angle ($\alpha$) que forme le couteau (7, 8) avec la verticale (V) est réglable entre 1° et 10°.

3. Machine selon la revendication 1 ou 2, caractérisée par le fait que le dispositif de coupe (8) est articulé par rapport à une plaque (38) reliée à un bras support (5) au moyen d'un pivot (37) sensiblement horizontal.

4. Machine selon la revendication 3, caractérisée par le fait que le pivot (37) se situe près de la partie inférieure du boîtier (11) du dispositif de coupe (6).

5. Machine selon l'une quelconque des revendications précédentes, caractérisée par le fait que le dispositif de coupe (8) est inclinable de part et d'autre de la verticale (V).

6. Machine selon l'une quelconque des revendications précédentes, caractérisée par le fait qu'elle comporte des moyens (44) pour l'inversion automatique de l'inclinaison du dispositif de coupe (6).

7. Machine selon la revendication 6, caractérisée par le fait que les moyens (44) pour l'inversion automatique de l'inclinaison du dispositif de coupe (6) comportent deux verrous (45 et 46) coopérant avec des butées (47) disposées sur le châssis (1) de la machine.

8. Machine selon la revendication 7, caractérisée par le fait que les butées (47) sont réglables.

9. Machine selon la revendication 6 ou 7, caractérisée par le fait que chaque verrou (45, 46) est articulé sur le dispositif de coupe (6) au moyen d'un axe sensiblement horizontal (52, 53).

10. Machine selon l'une quelconque des revendications 6 à 9, caractérisée par le fait que chaque verrou (45, 46) comporte une rampe (80) au moyen de laquelle il coopère avec la butée (47) correspondante prévue sur le châssis (1) de la machine.

11. Machine selon l'une quelconque des revendications 6 à 10, caractérisée par le fait que les verrous (45 et 46) sont soumis à la pression d'un ressort (58), en vue de leur engagement dans des entailles (56 ou 57) prévues sur la plaque (36) reliée au bras support (5).

12. Machine selon l'une quelconque des revendications précédentes, caractérisée par le fait que le dispositif

**0 081 447**

de coupe (6) comprend deux couteaux mobiles (7 et 8) dont chacun est fixé à un coulisseau (9 et 10) guidé dans un boîtier (11) par des moyens rapportés (61), disposés de part et d'autre desdits coulisseaux (9 et 10) et placés pres des deux extrémités dudit boîtier (11).

13. Machine selon la revendication 12, caractérisée par le fait que les coulisseaux (9 et 10) sont guidés de telle sorte qu'il existe un jeu entre eux et entre lesdits coulisseaux (9, 10) et les parois avant (62) et arrière (40) du boîtier (11).

14. Machine selon la revendication 12 ou 13, caractérisée par le fait que les moyens de guidage (61) des coulisseaux (9 et 10) sont constitués par des galets (63) montés sur des axes (65) guidés à la fois dans la paroi avant (62) et la paroi arrière (40) du boîtier (11).

15. Machine selon la revendication 14, caractérisée par le fait que tous les axes (65) situés sur le même côté par rapport aux coulisseaux (9 et 10) comportent une partie centrale (66) excentrée par rapport à ses parties guidées dans les parois avant (62) et arrière (40) du boîtier (11).

18. Machine selon la revendication 13, caractérisée par le fait que les moyens de guidage (81) des coulisseaux (9 et 10) sont constitués par des plaquettes à aiguilles (67).

17. Machine selon la revendication 18, caractérisée par le fait que les plaquettes (67) comportent deux rangées d'aiguilles placées en équerre.

18. Machine selon la revendication 16 ou 17, caractérisée par le fait que les flancs de chaque coulisseau (9, 10) sont en forme de V.

19. Machine selon l'une quelconque des revendications 16 à 18, caractérisée par le fait que les plaquettes à aiguilles (87) sont guidées dans des rails (68) logés dans le boîtier (11).

20. Machine selon la revendication 19, caractérisée par le fait que les rails (68) placés sur le mâme côte par rapport aux coulisseaux (9 et 10), sont réglables au moyen de vis (69).

21. Machine selon la revendication 12, caractérisée par le fait que les moyens de fixation (12) des couteaux (7 et 8) sur les coulisseaux (9 et 10) se situent en dehors du boîtier (11).

22. Machine selon l'une quelconque des revendications précédentes, caractérisée par le fait que la largeur (L) des couteaux (7 et 8) est moins importante à leur partie inférieure qu'à leur partie supérieure.

23. Machine selon l'une quelconque des revendications précédentes, caractérisée par le fait que l'épaisseur (E) des couteaux (7 et 8) est moins importante à leur partie inférieure qu' à leur partie supérieure.

24. Machine selon l'une quelconque des revendications 1 à 21, caractérisée par le fait qu'à la fois la largeur (L) et l'épaisseur (E) des couteaux (7 et 8) sont moins importantes à leur partie inférieure qu'à leur partie supérieure.

25. Machine selon l'une quelconque des revendications précédentes, caractérisée par le fait que chaque couteau (7, 8) présente des dents de coupe (70) à ses deux flancs, ces dents étant décalées de la valeur de la moitié d'un pas (P) sur l'un des flancs par rapport à l'autre.

**Claims**

1. Machine for removing blocks of forage from a silo mainly made up of a frame (1) equipped on its lower part with tines (4) extending on a substantially horizontal plane and, at a certain distance above these tines (4), a support (5) carrying a cutting device (6) including at least one knife (7, 8) extending towards the bottom, approximately at the level of the tines (4) and ensuring the cutting of the blocks, characterized in that the cutting device (6) is inclined in its own forward direction (A) in such a way that its knife (7, 8), when outside the silage, forms an angle ($\alpha$) with the vertical (V), the lower part of the knife (7, 8) situated in front of its upper part in respect to this same forward direction.

2. Machine as defined in claim 1, characterized in that the angle ($\alpha$) formed by the knife (7, 8) with the vertical (V) is adjustable between 1° and 10°.

3. Machine as defined in claim 1 or 2, characterized in that the cutting device (6) is articulated in respect to a plate (36) mounted to a support (5), by means of a substantially horizontal pivot (37).

4. Machine as defined in claim 3, characterized in that the pivot (37) is situated near the lower part of the housing (11) of the cutting device (6).

5. Machine as defined in any one of the preceding claims, characterized in that the cutting device (6) is inclinable on both sides of the vertical (V).

6. Machine as defined in any one of the preceding claims, characterized in that it includes means (44) for the automatic inversion of the inclination of the cutting device (6).

7. Machine as defined in claim 6, characterized in that the means (44) for the automatic inversion of the inclination of the cutting device (6) include two locks (45 and 46) cooperating with stops (47) mounted on the frame (1) of the machine.

8. Machine as defined in claim 7, characterized in that the stops (47) are adjustable.

9. Machine as defined in claim 6 or 7, characterized in that each lock (45, 46) is articulated on the cutting device (6) by means of a substantially horizontal axe (52,53).

10. Machine as defined in any one of claims 6 to 9, characterized in that each lock (45, 46) comprises a ramp (60) by which it cooperates with the corresponding stop (47) on the frame (1) of the machine.

11. Machine as defined in any one of claims 6 to 10, characterized in that the locks (45 and 46) are subject to the pressure of a spring (58), in view of their engagement in notches (56 or 57) on the plate (36) mounted to the support (5).

12. Machine as defined in any one of the preceding claims, characterized in that the cutting device (6) comprises two mobile knives (7 and 8) of which each one is fitted to a sliding connecting rod (9 and 10) guided in a housing (11) by inserted guiding means (61), placed on both sides of the said rods (9 and 10) and near the two extremities of the said housing (11).

13. Machine as defined in claim 12, characterized in that the sliding connecting rods (9 and 10) are guided in such a way that there is play between them and between the said rods (9, 10) and the front wall (62) and the rear wall (40) of the housing (11).

14. Machine as defined in claim 12 or 13, characterized in that the guiding means (61) of the sliding connecting rods (9 and 10) are made up of rollers (63) mounted to axes (65) guided in the front wall (62) as well as the rear wall (40) of the housing (11).

15. Machine as defined in claim 14, characterized in that all the axes (65) situated on the same side in respect to the sliding connecting rods (9 and 10) comprise a central part (66) offset in respect to their parts guided in the front wall (62) and the rear wall (40) of the housing (11).

16. Machine as defined in claim 13, characterized in that the guiding means (61) of sliding connecting rods (9 and 10) are made up of needle linear bearings (67).

17. Machine as defined in claim 16, characterized in that the linear needle bearings (67) comprise two rows of needles placed at an angle.

18. Machine as defined in claim 16 or 17, characterized in that the sides of each sliding connecting rod (9, 10) are a V-shape.

19. Machine as defined in any one of claims 16 to 18, characterized in that the needle linear bearings (67) are guided in rails (68) mounted in the housing (11).

20. Machine as defined in claim 19, characterized in that the rails (68) on the same side in respect to sliding connecting rods (9 and 10) are adjustable by means of screws (69).

21. Machine as defined in claim 12, characterized in that the fixing means (12) of the knives (7 and 8) on sliding connecting rods (9 and 10) are situated outside the housing (11).

22. Machine as defined in any one of the preceding claims, characterized in that the width (L) of knives (7 and 8) is less on their lower part than on their upper part.

23. Machine as defined in any one of the preceding claims, characterized in that the thickness (E) of knives (7 and 8) is less on their lower part than on their upper part.

24. Machine as defined in any one of claims 1 to 21, characterized in that both the width (L) and the thickness (E) of knives (7 and 8) are less on their lower part than on their upper part.

25. Machine as defined in any one of the preceding claims, characterized in that each knife (7, 8) has cutting teeth (70) at both its sides, these teeth being offset by half the distance (P) of one side in respect to the other.

## Patentansprüche

1. Maschine zur Entnahme von Futterblocks aus einem Silo, die einen Rahmen (1) aufweist, an welchem Gabelzinken (4) am unteren Teil befestigt sind, die sich in einer horizontalen Ebene erstrecken und, in gewissem Abstand oberhalb dieser Gabelzinken (4), ein Träger (5) mit einer Schneidvorrichtung (6) angeordnet ist, die mit mindestens einem Schneidmesser (7, 8) ausgerüstet ist, das sich nach unten ungefähr bis in den Bereich der Gabelzinken erstreckt und das Ausschneiden der Futterblöcke ausführt, dadurch gekennzeichnet, dass die 8chneidvorrichtung (6) in seine eigene Schnittrichtung (A) geneigt ist, sodass sein Schneidmesser (7, 8), wenn es sich ausserhalb des Futters befindet, einen Winkel ($\alpha$) mit der Senkrechte (V) bildet, wobei der Unterteil des Schneidmessers (7, 8) sich, in Bezug auf die Schnittrichtung (A), vor seinem Oberteil befindet.

2. Maschine nach Anspruch 1, dadurch gekennzeichnet, dass der Winkel ($\alpha$) der das Schneidmesser (7, 8) mit der Senkrechte (V) bildet zwischen 1° und 10° einstellbar ist.

3. Maschine nach Anspruch 1 oder 2, dadurch gekennzeichnet, dass die 8chneidvorrichtung (6) gegenüber einer mit dem Träger (5) verbundenen Platte (36), mittels einem im wesentlichen horizontalen Zapfen gelenkig angeordnet ist.

4. Maschine nach Anspruch 3, dadurch gekennzeichnet, dass der Zapfen (37) sich in der Nähe des Unterteils des Gehäuses (11) der Schneidvorrichtung (6) befindet.

5. Maschine nach irgendeinem der vorstehenden Ansprüche, dadurch gekennzeichnet, dass die Schneidvorrichtung (6) auf beiden Seiten der Senkrechte (V) neigbar ist.

6. Maschine nach irgendeinem der vorstehenden Ansprüche, dadurch gekennzeichnet, dass sie Mittel (44) besitzt für eine automatische Umstellung der Neigung der Schneidvorrichtung (6).

7. Maschine nach Anspruch 6, dadurch gekennzeichnet, dass die Mittel (44) für die automatische Umstellung der Neigung der Schneidvorrichtung (6) zwei Riegel (45 und 46) aufweisen, die mit auf dem Rahmen (1) der Maschine sich befindlichen Anschläge (47) zusammenarbeiten.

8. Maschine nach Anspruch 7, dadurch gekennzeichnet, dass die Anschläge (47) einstellbar sind.

9. Maschine nach Anspruch 6 oder 7, dadurch gekennzeichnet, dass jeder Riegel (45, 46) mittels einer im wesentlichen horizontalen Achse (52, 53) auf der Schneidvorrichtung (6) gelenkig gelagert ist.

10. Maschine nach irgendeinem der Ansprüche 6 bis 9, dadurch gekennzeichnet, dass jeder Riegel (45, 46) eine schiefe Ebene (60) aufweist, mit welcher er mit dem entsprechenden auf dem Rahmen (1) der Maschine vorgesehenen Anschlag (47) zusammenarbeitet.

11. Maschine nach irgendeinem der Ansprüche 6 bis 10, dadurch gekennzeichnet, dass die Riegel (45 und 46) unter dem Druck einer Feder (58) stehen zwecks Eingriff in Kerben (56 oder 57), die auf der mit dem Träger (5) verbundenen Platte (36) vorgesehen sind.

12. Maschine nach irgendeinem der vorstehenden Ansprüche, dadurch gekennzeichnet, dass die Schneidvorrichtung (6) zwei bewegbare Schneidmesser (7 und 8) aufweist, von denen jedes an einer Kulisse (9 und 10) befestigt ist, die in einem Gehäuse (11) durch eingesetzte Mittel (61) geführt sind, welche Mittel sich auf beide Seiten der Kulissen (9 und 10) und in der Nähe der beiden Enden des Gehäuses (11) befinden.

13. Maschine nach Anspruch 12, dadurch gekennzeichnet, dass die Kulissen (9 und 10) derart geführt sind, dass ein Spielraum besteht zwischen den beiden Kulissen und zwischen ihnen und der Vorderwand (62) und der Hinterwand (40) des Gehäuses (11).

14. Maschine nach Anspruch 12 oder 13, dadurch gekennzeichnet, dass die Führungsmittel (61) der Kulissen (9 und 10) durch Rollen (63) gebildet sind, die auf Achsen (65) montiert sind, welche zugleich in der Vorderwand (62) und in der Hinterwand (40) des Gehäuses (11) gelagert sind.

15. Maschine nach Anspruch 14, dadurch gekennzeichnet, dass alle Achsen (65) die sich auf der gleichen Seite der Kulissen (9 und 10) befinden, ein Mittelteil (66) besitzen, das exzentriert ist gegenüber deren in der Vorderwand (62) und in der Hinterwand (40) des Gehäuses (11) gelagerten Teile.

16. Maschine nach Anspruch 13, dadurch gekennzeichnet, dass die Führungsmittel (61) der Kulissen (9 und 10) durch Nadelschlitten (67) gebildet sind.

17. Maschine nach Anspruch 16, dadurch gekennzeichnet, dass die Nadelschlitten (67) zwei Reihen Nadeln aufweisen, die winkelig zu einander stehen.

18. Maschine nach Anspruch 16 oder 17, dadurch gekennzeichnet, dass die Flanken jeder Kulisse (9, 10) V-förmig sind.

19. Maschine nach irgendeinem der Ansprüche 16 bis 18, dadurch gekennzeichnet, dass die Nadelschlitten (67) durch Schienen (68) geführt sind, die im Gehäuse (11) gelagert sind.

20. Maschine nach Anspruch 19, dadurch gekennzeichnet, dass die Schienen (68) die sich auf der gleichen Seite der Kulissen (9 und 10) befinden, durch Schrauben (69) verstellbar sind.

21. Maschine nach Anspruch 12, dadurch gekennzeichnet, dass die Befestigungsmittel (12) der Schneidmesser (7 und 8) auf den Kulissen (9 und 10) sich ausserhalb des Gehäuses (11) befinden.

22. Maschine nach irgendeinem der vorstehenden Ansprüche, dadurch gekennzeichnet, dass die Breite (L) der Schneidmesser (7 und 8) kleiner ist an derem Unterteil als an derem Oberteil.

23. Maschine nach irgendeinem der vorstehenden Ansprüche, dadurch gekennzeichnet, dass die Dicke (E) der Schneidmesser (7 und 8) kleiner ist an derem Unterteil als an derem Oberteil.

24. Maschine nach irgendeinem der Ansprüche 1 bis 21, dadurch gekennzeichet, dass zugleich die Breite (L) und die Dicke (E) der Schneidmesser (7 und 8) kleiner sind an derem Unterteil als an derem Oberteil.

25. Maschine nach irgendeinem der vorstehenden Ansprüche, dadurch gekennzeichnet, dass jedes Schneidmesser (7, 8) auf seinen beiden Seiten Schneidzähne (70) besitzt, wobei diese Schneidzähne um den Wert der Hälfte eines Ausschnitts (P) versetzt sind auf einer Seite gegenüber der anderen Seite.

Fig: 1

0 081 447

Fig: 2

38
40
36
13
39
32
33
5
39
11
6
38
9
12
10
7  8
III
III

Fig:3

42
43
36
41  37
42
38
11
40
13
39
38
39
6
12
9
A
V
7
α

0 081 447

Fig: 4

Fig: 5

Fig: 6

Fig:7

Fig: 8

Fig:9

7

Fig: 10

Fig: 11

P

70 —— —— 70

7,8    —— 7,8

L    E